# EUROPÄISCHE PATENTSCHRIFT

(11) **EP 0 588 807 B1**
(45) Veröffentlichungstag und Bekanntmachung des Hinweises auf die Patenterteilung: **28.02.1996**
(21) Anmeldenummer: 92909470.4
(22) Anmeldetag: 29.04.1992
(51) Int. Cl.: F16D 65/097

(54) **SCHWIMMSATTELBREMSE MIT FLACH BAUENDER, AM BREMSKLOTZ BEFESTIGTER HALTEFEDER**
FLOATING CALIPER BRAKE WITH FLAT HOLDING SPRING SECURED TO THE BRAKE PAD
FREIN A ETRIER FLOTTANT A RESSORT PLAT DE RETENUE ASSUJETTI A LA PLAQUETTE DU FREIN

(30) Priorität: 17.06.1991 DE 4119892
(43) Veröffentlichungstag der Anmeldung: 30.03.1994
(73) Patentinhaber: ITT Automotive Europe GmbH, D-60488 Frankfurt (DE)
(72) Erfinder: STÖRZEL, Karl, D-6072 Dreieich (DE); BUNGERT, Hans, D-6222 Geisenheim (DE); KLIMT, Ulrich, D-6114 Gross-Umstadt (DE)
(74) Vertreter: Portwich, Peter
(86) Internationale Anmeldenummer: EP9200930
(87) Internationale Veröffentlichungsnummer: WO9222755

(56) Entgegenhaltungen:
- EP-A- 0 373 333
- DE-A- 3 808 139
- DE-A- 4 007 721
- US-A- 3 390 744
- US-A- 3 486 589
- PATENT ABSTRACTS OF JAPAN vol. 6, no. 216 (M-168)(1094) 29. Oktober 1982 & JP-A-57 120 735 (AKEBONO BRAKE K.K.) 27 July 1982

## Beschreibung

Bei Scheibenbremsen ist es wichtig, daß nach dem Ende der Bremsbetätigung die Bremsklötze um einen hinreichenden Betrag von der Bremsscheibe zurückgezogen werden, um auf die Bremsscheibe wirkende Restmomente sowie Kaltauswaschungen zu vermeiden. Kaltauswaschungen entstehen bei ungebremster sich drehender Bremsscheibe (normaler Fahrbetrieb). Durch Scheibenschlag können die bestehenden Probleme nur in Sonderfällen gelöst werden.

Da durch die Roll-back-Wirkung des Dichtrings am Kolben dieser nach der Bremsbetätigung zurückgezogen wird, ist man dazu übergegangen, insbesondere bei Schwimmsattelbremsen den Bremsklotz an den Kolben anzubinden. Dies geschieht gemäß der DE-OS 40 07 721 durch eine an der Rückfläche des Bremsklotzes angebrachte, mehrere Finger aufweisende Blattfeder, welche in eine entsprechende Nut im Kolben eingerastet wird, wodurch der Bremsklotz federnd in dem Kolben gehalten ist.

Nachteilig bei einer derartigen Konstruktion ist es, daß der Bremsklotz beim Ein- und Ausbau um die Tiefe der Federfinger in axialer Richtung bewegt werden muß, um den Bremsklotz an dem Kolben zu befestigen bzw. von diesem zu lösen. Vielfach steht aber ein derartig großer Einbauraum in axialer Richtung für den Bremsklotz nicht zur Verfügung. Das gilt insbesondere bei innenumgreifenden Schwimmsattelbremsen, bei denen der kolbenseitige Bremsklotz bei eingebauter Bremsscheibe herausgenommen werden muß, so daß der in axialer Richtung zur Verfügung stehende Bauraum äußerst gering ist.

Zum Entfernen eines Bremsklotzes in radialer Richtung ist es aus der japanischen Patentanmeldung 56.3830 vom 16.01.1981 bekannt, an dem Rücken des Bremsklotzes Federschenkel vorzusehen, welche hinter die Finger des äußeren Sattelschenkels einer Schwimmsattelbremse greifen und somit den äußeren Bremsbelag gegen den äußeren Sattelschenkel ziehen.

Aus der US 3,486,589 ist eine Scheibenbremse bekannt, bei der eine Haltefeder für einen Bremsklotz an einem Bremskolben befestigt ist. Der Bremsklotz wird am Bremskolben durch axiale Vorspannung gehalten, indem eine Federzunge der Haltefeder hinter einen am Bremsklotz befestigten Stift greift. Beim radialen Einbau des Bremsklotzes wird die Federzunge hinter den Stift geführt. Dabei ist aber der zur Verfügung stehende Federweg sehr klein, so daß die Feder eine hohe Federkonstante aufweisen muß, um eine genügend hohe Haltekraft aufzubringen. Dies erschwert den Einbau des Bremsklotzes.

Die Erfindung geht aus von einer Scheibenbremse, gemäß dem Oberbegrif des Anspruchs 1 und hat sich zur Aufgabe gestellt, diese Bremse derart zu verbessern, daß bei einem geringen axialen Einbauraum der Bremsklotz auf sichere und einfache Weise federnd mit dem Kolben verbunden werden kann und mit ausreichender Haltekraft am Kolben gehalten ist.

Diese Aufgabe wird durch die Merkmale des kennzeichnenden Teils des Anspruchs 1 gelöst. Die Erfindung besteht im Prinzip darin, an der Rückenplatte eine Feder vorzusehen, welche über eine am Kolben angeordnete Führung bei einer Verschiebung des Bremsklotzes in radialer Einbaurichtung den Bremsklotz über die Führung gegen den Kolben zieht, so daß der Bremsklotz mit axialer Vorspannung in Einbaulage an dem Kolben anliegt. Durch die auch axial verlaufende Führung kann der Federweg vergrößert und damit die notwendige Haltekraft auch mit geringer Federkonstante aufrecht erhalten werden. Beim radialen Einführen des Bremsklotzes in die Scheibenbremse kann der schräg nach unten geneigte Federschenkel in einen zugehörigen Schlitz im Kolben eintauchen, was zu einer sehr einfachen Konstruktion führt.

Der Federschenkel kann durch unterschiedliche Maßnahmen innerhalb des Schlitzes gehalten werden. Eine besonders einfache Konstruktion ergibt sich gemäß Anspruch 2.

Um in einfacher Weise den Kolben mit einer für den Federschenkel geeigneten Schlitz zu versehen, empfiehlt sich in Weiterbildung der Erfindung die Anwendung der Merkmale nach Anspruch 3. Hiernach wird in den Kolben ein Einsatz eingesetzt, welcher die benötigte Führung für den Federschenkel besitzt. Auf diese Weise kann der Kolben nachträglich mit einer Führung für den Bremsklotz vorgesehen werden, falls die Konstruktion der Bremse die erfindungsgemäße Halterung des Bremsklotzes am Kolben nahelegt. Rüstet man das Ende des Federschenkels mit einem in Umfangsrichtung weisenden Ansatz aus, so empfiehlt sich, die Einfädelöffnung des Federschenkels gemäß Anspruch 4 auszugestalten. Man erhält hierdurch eine recht zuverlässig wirkende Verbindungsmöglichkeit zwischen Bremsklotz und Kolben.

Zwar kann der Federschenkel von dem Bremsklotz geneigt von oben nach unten weisen. In vorteilhafter Weiterbildung der Erfindung empfiehlt sich allerdings die Anwendung der Merkmale nach Anspruch 5. Auf diese Weise wird das Federende über die Führungsbahnen gezogen und nicht gedrückt, was zu einer Verbesserung des Führungsverhaltens des Federschenkels auf der Federbahn führt. Außerdem wird der Bremsbelag gleichmäßig an den Kolben herangezogen, was zu einer verbesserten Anlage des Bremsklotzes am Kolben führt. Die Federbefestigung ist zwar unten, der Kraftangriffspunkt liegt jedoch in der Kolbenmitte. Beim Ausbau läßt sich das obere Ende des Bremsklotzes leichter vom oberen Teil der Stirnfläche des Kolbens in axialer Richtung lösen und damit aus seiner Sicherung herausschwenken.

Einen besonders einfachen Aufbau für den Ansatz am Federschenkel erhält man gemäß Anspruch 6.

Um zu verhinern, daß der Kolben sich selbsttätig aus seiner Einbaulage lösen kann, empfiehlt sich in Weiterbildung der Erfindung die Merkmalskombination nach Anspruch 7. Der in radialer Richtung zwischen Kolben und Bremsscheibe eingefügte Bremsklotz verrastet somit am Kolben und wird elastisch in dieser Raststellung gehalten, bis beim Ausbau die Rastnase aus dem Innenraum des Kolbens herausgeschwenkt wird. Zur Drehsicherung des Bremsklotzes gegenüber dem Kolben kann gleichzeitig auch der Ansatz mit einer entsprechenden Ausnehmung versehen sein, in welcher im eingerasteten Zustand die Rastnase des Bremsklotzes ragt, so daß der Kolben bzw. der Einsatz sich nicht gegenüber dem Bremsklotz verdrehen kann.

Für den Einsatz ergibt sich eine besonders einfache Ausgestaltung nach Anspruch 8.

Um sicherzustellen, daß das Ende des Federschenkels beim Ausbau des Bremsklotzes auch sicher aus der Eingangsöffnung des Schlitzes herausgeführt wird, dient ein Leitblech gemäß Anspruch 9, das das mit dem Ansatz versehene Ende des Federschenkels einfängt und aus dem Schlitz führt.

Gemäß Anspruch 11 kann auch ein zur Befestigung der Feder dienender Ansatz am Rücken des Bremskolbens in Verbindung mit einer entsprechenden Ausnehmung im Kolbeneinsatz zur Bremssicherung dienen.

Hinsichtlich des für die erfindungsgemäße Bremse verwendeten Bremsklotzes empfiehlt es sich, wenn dieser die Merkmale gemäß Anspruch 12 besitzt, da hier das Dämpfungsblech gleichzeitig zur erfindungsgemäßen Halterung des Bremsklotzes am Kolben ausgenutzt wird.

Ein Ausführungsbeispiel der Erfindung wird nachfolgend anhand der Zeichnung erläutert.

Darin zeigt
- Fig.1 und 2: in Seitenansicht und Rückenansicht einen Bremsklotz mit daran befestigtem Federschenkel,
- Fig.3 bis 5: in aus zwei Richtungen gesehener Seitenansicht sowie aus Rückenansicht den in der Erfindung angewendeten Einsatz,
- Fig.6 bis 8: den Einbau des Bremsklotzes an den Kolben in drei verschiedenen Phasen,
- Fig.9 und 10: den Zusammenbau von Bremsklotz und Kolben in einer gemäß Fig. 8 geringfügig abgeänderten Ausgestaltung.
- Fig.11 und 12: in Vorderansicht und Seitenansicht einen Federschenkel gemäß der Erfindung,
- Fig.13: in vergrößerter Darstellung das obere Ende des Federschenkels gemäß Fig. 11 und 12 in vergrößerter Darstellung der Seitenansicht.

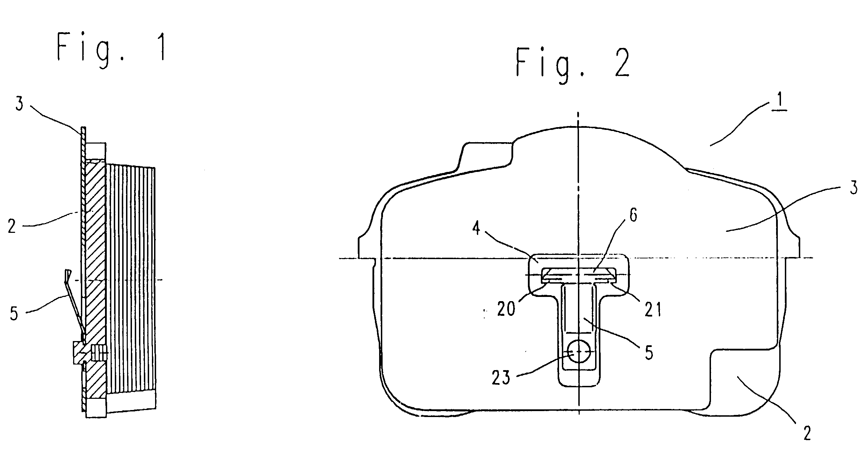

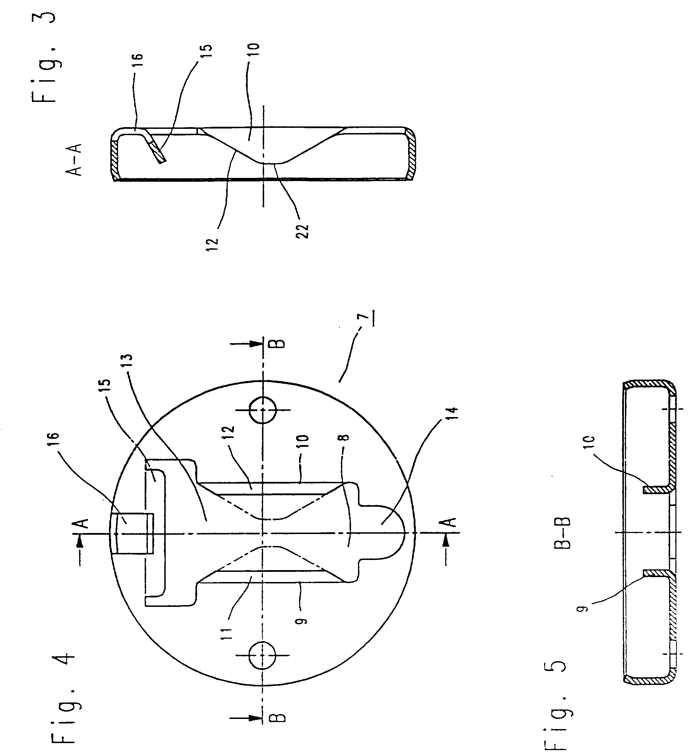

In Fig. 1 und 2 ist der Bremsklotz 1 gezeigt, an dessen Rückenplatte 2 ein Dämpfungsblech 3 befestigt ist. Das Dämpfungsblech besitzt eine im wesentlichen T-förmige Ausnehmung 4, innerhalb der der Federschenkel 5 an der Rückenplatte 2 befestigt ist. Der Federchenkel mit seinem Ansatz 6 besitzt ebenfalls im wesentlichen T-Form, hat aber zur Vermeidung von Geräusch- und Wärmeübertragung keinen Kontakt mit dem Dämpfungsblech.

Fig. 3 bis 5 zeigen den topfförmigen Einsatz 7, der einen Schlitz 8 besitzt. An den seitlichen Enden des Schlitzes 8 sind zwei Ansätze 9,10 rechtwinklig hochgestellt, welche, wie aus Fig. 3 ersichtlich, jeweils geneigte Führungsflächen 11,12 besitzen. An dem oberen Ende des Schlitzes 8 schließt sich, wie aus Fig. 4 ersichtlich, eine Queröffnung 13 an, so daß die entstehende Aussparung etwa T-Form hat.

An den Schlitz 8 schließt sich an dessen in der Fig. 4 unteren Ende eine im wesentlichen halbrunde Ausnehmung 14 an.

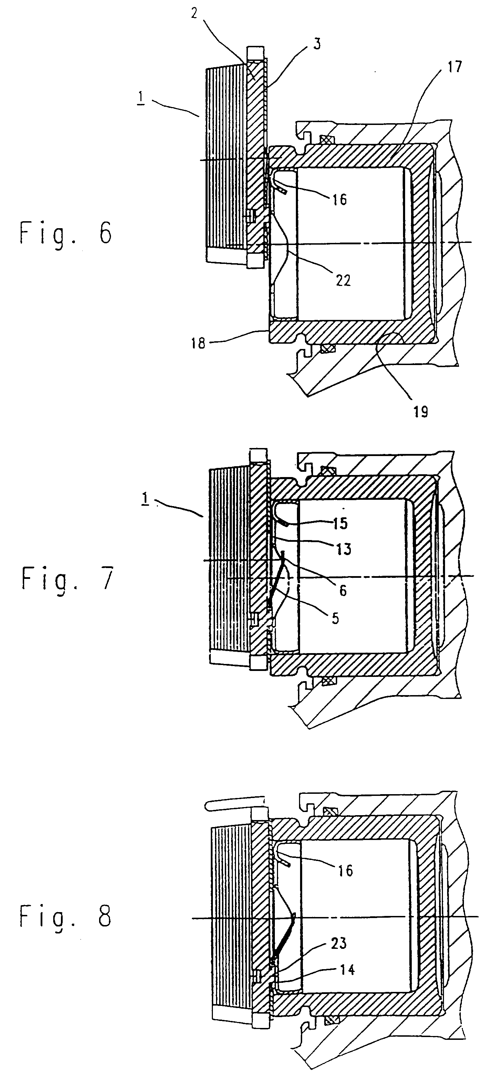

Da der Einsatz 7 aus einem Blech geformt ist, sind gestrichelt noch die Ansätze 9 and 10 in Fig. 4 in eier Stellung angedeutet, in der sie noch in der Ebene des Schlitzes 8 liegen, bevor sie in eine hierzu senkrechte Ebene in ihre Endstellung gemäß Fig. 3 und 5 abgebogen wurden. Entsprechendes gilt für eine geneigte Leitwand 15, die in ihrer geneigten Endlage, aber auch gestrichelt dargestelllt, in ihrer ursprünglichen in der Ebene der Ausnehmung 8 befindlichen Lage dargestellt ist.

Fig. 4 und 5 zeigt noch eine Durchtrittsöffnung 16 im Bereich der Leitwand 15, deren Funktion noch weiter unten erläutert wird.

Die Arbeitsweise der Erfindung wird nachfolgend anhand der Fig. 6 bis 8 erklärt.

Fig. 6 zeigt den Zustand des Bremsklotzes, der etwa bis zu seiner Mittelebene in den zwischen der nicht dargestellten Bremsscheibe und den Kolben 17 gebildeten Schacht eingeschoben ist. Durch die ringförmige Stirnwand 18 des Kolbens 17, der innerhalb eines Zylinders 19 geführt ist, wird der Federschenkel 5 gegen die Rückenplatte gepreßt, so daß sie recht dicht an dieser anliegt. Schiebt man den Bremsklotz 1, wie in Fig. 7 gezeigt, noch weiter nach unten, so tritt der Ansatz 6 aufgrund der axialen Vorspannung des Federendes durch die Queröffnung 13, so daß die Auflageflächen 20,21 des Ansatzes 6 auf den Führungsflächen 11 und 12 der Ansätze 9 und 10 angreifen und das den Ansatz 6 tragende Schenkelende während der Radialbewegung des Bremsklotzes 1 in axialer Richtung führen. Dabei zieht der Ansatz 6 über den Federschenkel 5 den Bremsklotz in axialer Richtung gegen die Stirnwände 18 des Kolbens 17.

Fig. 8 zeigt die Lage des Bremsklotzes 1 in seiner Endstellung, bei der der Ansatz 6 auf dem Abschnitt 22 der Ansätze 9 und 10 ruht, welcher am weitesten axial in den Innenraum des Kolbens ragt.

Ein wichtiges Merkmal der Erfindung ist es, daß der zur Befestigung des Federschenkels 5 an der Rückenplatte 2 dienende Vorsprung 23 in die halbrunde Ausnehmung 14 (Fig. 4) ragt, so daß die seitlichen Wände dieser Ausnehmung eine Drehbewegung des Bremsklotzes gegenüber dem Einsatz 7 und damit dem Kolben 17 verhindern. Der Vorsprung kann als Niet, Kerbnagel oder zur Befestigung des Federschenkels rollierte Durchstellung der Rückenplatte 2 ausgestaltet sein.

Da der Federschenkel 5, wie aus Fig. 1 ersichtlich, gegenüber der Rückenplatte 2 eine gewisse Neigung hat, kann beim Ausbau des Bremsklotzes 1 das Problem bestehen, daß aufgrund des radial nach oben beweglichen Bremsklotzes der Ansatz 6 sich parallel zur Queröffnung 13 ans obere Ende des Einsatzes 7 bewegt und an dessen innerer Mantelfläche anschlägt, so daß der Bremsklotz nicht radial aus dem Schacht gezogen werden kann. Hierzu dient die geneigte Leitwand 15, die den Ansatz 6 des Federschenkels 5 einfängt und durch ihre Neigung ihn in axialer Richtung aus der Queröffnung 13 auf die Rückenplatte 2 befördert, so daß der Bremsklotz radial herausgehoben werden kann.

Die Rückenplatte kann gemäß der Erfindung an ihrem oberen, im Einbauzustand in den Kolben ragenden Ende auch mit einer Rastnase versehen sein, wie sie beispielsweise in der DE-OS 38 08 139 (s. Fig. 4) ausführlich beschrieben ist. Eine derartige Rastnase kann in ihrem eingebauten Zustand durch die Durchtrittsöffnung 16 ragen, so daß sie einmal durch ihre in radialer Richtung weisende Kante ein Herauswandern des Bremsklotzes in radialer Richtung sicher verhindert. Zum anderen kann diese durch die Durchtrittsöffnung 16 ragende Nase als Verdrehsicherung gegenüber dem Einsatz 7 dienen. Die Rastnase ist aus Gründen der Übersichtlichkeit in der Zeichnung nicht angedeutet.

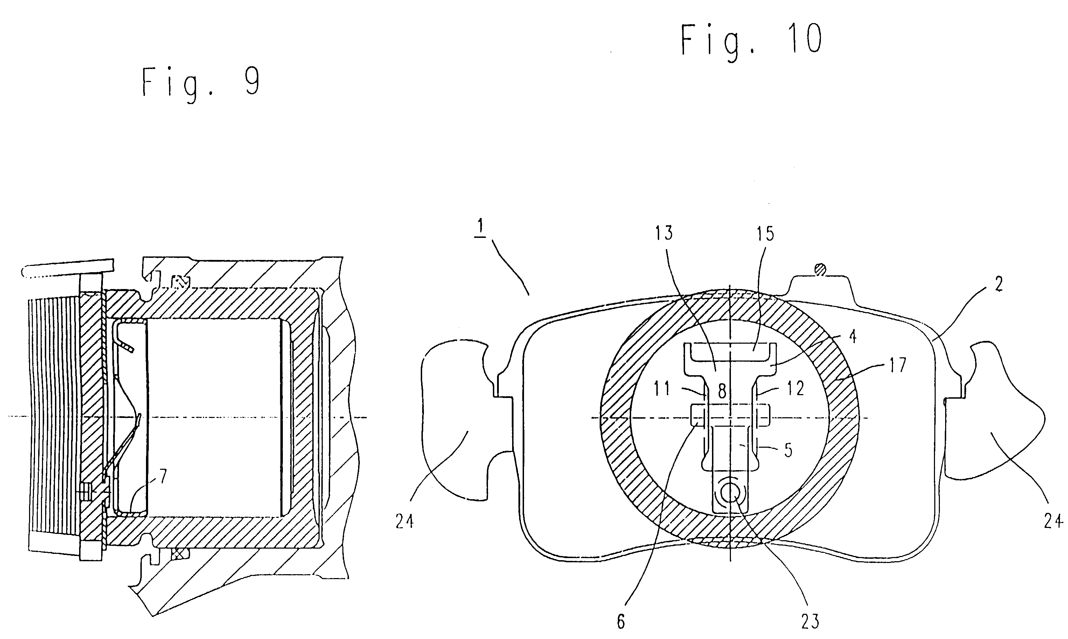

Die Fig. 9 und 10 zeigen noch eine erfindungsgemäße Anordnung, in der auf eine Drehsicherung verzichtet wurde. Zur Verbesserung der axialen Zugspannung wurde der Einsatz 7 weiter in den Innenraum des Kolbens eingeschoben gegenüber der Bauweise nach den Fig. 6 bis 8.

Fig. 10 zeigt einen Schnitt durch den Kolben 17 mit Blick auf den eingebauten Bremsklotz 1, der seitlich auf Bahnen eines Trägers 24 aufliegt und sich im Einbauzustand befindet. In Fig. 10 ist gut zu erkennen, wie der Ansatz 6 der Feder 5 hinter die Führungsflächen 11 und 12 des Schlitzes 8 greift. Durch den Schlitz 8 ist der Blick frei durch die T-förmige Ausnehmung 4 im Dämpfungsblech auf die Rückenplatte 2.

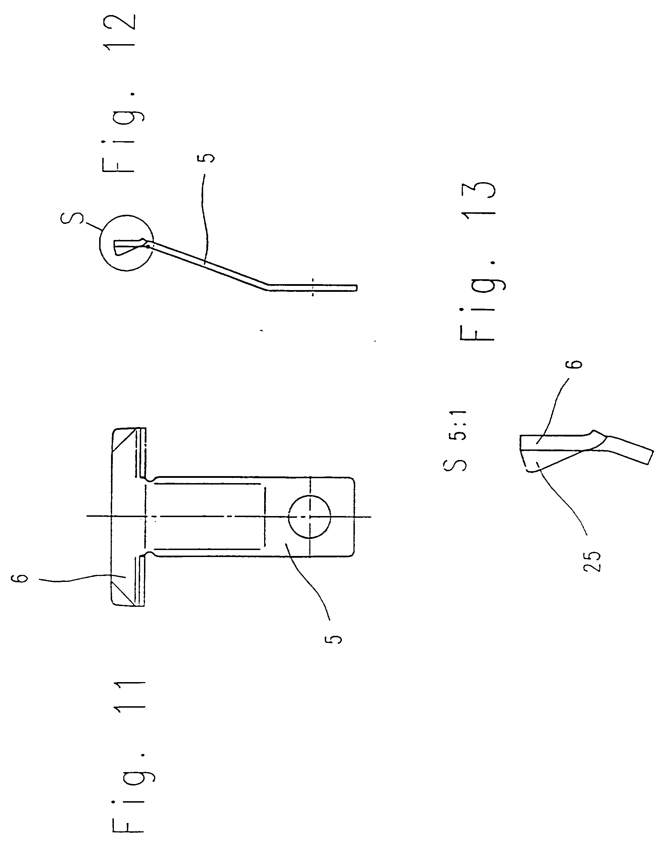

Die Fig. 11 bis 13 zeigen zwei Ansichten des Federschenkels 5 in vergrößerter Darstellung sowie in Fig. 13 in nochmals vergrößerter Darstellung die Seitenansicht des Ansatzes 6. Wichtig hinsichtlich des Ansatzes 6 sind seitliche Führungsnasen 25, die eine Seitenführung des Ansatzes 6 und damit des Federschenkels 5 gegenüber den Ansätzen 9 und 10 sicherstellen, so daß sich der Federschenkel nicht gegenüber dem Einsatz 7 drehen kann.

## Patentansprüche

1. Scheibenbremse mit Haltefeder, an deren sich im wesentlichen in radialer Richtung erstreckenden und in axialer Richtung geneigten Federschenkel (5) bei radialer Einbaubewegung des Bremsklotzes (1) eine Führung (8 bis 13) angreift und den Federschenkel (5) in Einbaulage des Bremsklotzes (1) zumindest in axialer Richtung vorspannt, dadurch **gekennzeichnet**, daß die Haltefeder am Bremsklotz (1) befestigt ist und daß die mit dem Bremsengehäuse verbundene Führung (8 bis 13) ein am Kolben (17) angeordneter, im wesentlichen in radialer Richtung weisender Schlitz (8) ist, welcher mit zumindest einer in radialer Richtung laufenden und in axialer Richtung geneigten Führungskante oder Führungsfläche (11,12) versehen ist, die von dem Federschenkel (5) beim radialen Einbau hintergriffen wird und den Federschenkel (5) bei dessen radialer Bewegung zumindest in axialer Richtung spannt.

2. Scheibenbremse nach Anspruch 1, dadurch **gekennzeichnet,** daß der Federschenkel (5) an seinem freien Ende einen im wesentlichen in Umfangsrichtung weisenden Ansatz (6) aufweist, der den Schlitz (8) hintergreift.

3. Scheibenbremse nach Anspruch 2, dadurch **gekennzeichnet,** daß in dem Kolben (17) ein sich im wesentlichen parallel zur Rückenplatte (2) erstreckender Einsatz (7) befestigt ist, der den Schlitz (8) trägt und daß an den Schlitzrändern zwei sich radial erstreckende Ansätze (9,10) befestigt sind, die in radialer Richtung in ihrer axialen Höhe ansteigen und deren in axiale Richtung weisende Kanten die Führungsflächen (11, 12) bilden.

4. Scheibenbremse nach Anspruch 2 oder 3, dadurch **gekennzeichnet**, daß der in Einbaurichtung am Anfang liegende Teil des Schlitzes (8) mit einer sich im wesentlichen in Umfangsrichtung erstreckenden Queröffnung (13) versehen ist, über die der Ansatz (6) in den Schlitz (8) eintaucht und diesen bei radialer Verschiebung hintergreift.

5. Scheibenbremse nach einem der Ansprüche 1 bis 4, dadurch **gekennzeichnet**, daß der Federschenkel (5) am in Einbaulage radial unteren Teil der Rückenplatte (2) an dieser vorzugsweise unlösbar befestigt ist.

6. Scheibenbremse nach einem der Ansprüche 2 bis 5, dadurch **gekennzeichnet**, daß der Ansatz (6) ein im wesentlichen quaderförmig den Federschenkel (5) abschließendes Querglied ist, welches dem Federschenkel (5) eine T-förmige Gestalt verleiht.

7. Scheibenbremse nach einem der Ansprüche 1 bis 6, dadurch **gekennzeichnet,** daß der Bremsklotz (1) mit einer Rastnase als mechanischen Anschlag versehen ist, die in Einbaulage des Bremsklotzes (1) die innere Mantelfläche des Kolbens (17) hintergreift und daß der Federschenkel (5) in Einbaulage neben der axialen Kraft nur eine geringe Reibkraft auf den Bremsklotz (1) ausübt, die die Rastnase in Eingriff mit dem Kolben (17) hält.

8. Scheibenbremse nach einem der Ansprüche 3 bis 7, dadurch **gekennzeichnet**, daß der topfförmige Einsatz (7) in die Zylinderöffnung des Kolbens (17) eingesetzt wird, wobei der Einsatz (7) über seine äußere Mantelfläche im Kolben (17) gehalten und der Boden des Einsatzes (7) dem Bremsklotz (1) zugewandt ist.

9. Scheibenbremse nach einem der Ansprüche 3 bis 8, dadurch **gekennzeichnet**, daß der Einsatz (7) aus Blech geformt ist und vorzugsweise eine geneigte Leitwand (15) besitzt, die in Ausbaurichtung des Bremsklotzes (1) den Ansatz aus dem Schlitz (8) führt.

10. Scheibenbremse nach einem der Ansprüche 3 bis 9, dadurch **gekennzeichnet**, daß die Ansätze (9,10), in axiale Richtung ragend, aus dem Einsatz (7) herausgeformt sind.

11. Scheibenbremse nach einem der Ansprüche 3 bis 10, dadurch **gekennzeichnet,** daß der Einsatz (7) mit einer einem vorzugsweise der Federbefestigung am Bremsklotz (1) dienenden Vorsprung (23) zugeordneten Ausnehmung (14) versehen ist, in die der Vorsprung (23) in Einbaulage des Bremsklotzes (1) als Drehsicherung eintaucht.

12. Bremsklotz für eine Scheibenbremse nach einem der Ansprüche 1 bis 11, wobei an seiner dem Reibbelag abgewandten Rückwand ein schräg zur Rückenplatte (2) geringfügig geneigter, im wesentlichen in radiale Richtung weisender Federschenkel (5) vorgesehen ist, der in Form einer Blattfeder aus dem Dämpfungsblech (3) auf der Rückenplatte (2) des Bremsklotzes (1) ragt, dadurch **gekennzeichnet,** daß der Federschenkel (5) an seinem freien Ende einen im wesentlichen in Umfangsrichtung weisenden Ansatz (6) aufweist, welcher dem Federschenkel (5) eine T-förmige Gestalt verleiht, mit dem der Federschenkel (5) ein Gegenstück am Kolben (17) haltend hintergreifen kann.

## Claims

1. A disc brake including a retaining spring having spring legs (5) which extend substantially in a radial direction and are inclined in an axial direction and on which a guideway system (8 to 13) makes catch which, upon a radial assembling movement of the brake shoe (1), preloads the spring leg (5) at least in the axial direction in the assembled position of the brake shoe (1),
**characterized** in that the retaining spring is fixed to the brake shoe (1), and in that the guideway system (8 to 13) on the housing is a slot (8) which is arranged on the piston (17) and points substantially in a radial direction, the slot including at least one guide edge or guide surface (11, 12) extending in the radial direction and inclined in the axial direction and engaged from behind by the spring leg (5) during radial assembly and tensioning the spring (5) during its radial movement at least in the axial direction.

2. A disc brake as claimed in claim 1,
**characterized** in that, at its free end, the spring leg (5) has a projection (6) essentially pointing in the circumferential direction and reaching behind the slot (8).

3. A disc brake as claimed in claim 2,
**characterized** in that an insert (7) essentially extending in parallel to the backing plate (2) is fixed in the piston (17), the insert (7) including the slot (8), and in that, on the slot edges, two radially extending projections (9, 10) are fastened whose axial height increases in the radial direction and the edges of which point in the axial direction and form the guiding surfaces (11, 12).

4. A disc brake as claimed in claim 2 or in claim 3,
**characterized** in that the part of the slot (8) which, in the direction of assembly, lies in front is provided with a transverse opening (13) essentially extending in the circumferential direction, the projection (6) plunging into the slot (8) through the opening (13) and engaging the slot (8) from behind upon radial displacement.

5. A disc brake as claimed in any one of claims 1 through 4,
**characterized** in that the spring leg (5) is fastened, preferably in an undetachable manner, to that part of the backing plate (2) which, in the assembled position, is the radially lower part of the backing plate (2).

6. A disc brake as claimed in any one of claims 2 through 5,
**characterized** in that the projection (6) is a transverse member essentially finishing off the spring leg (5) like a block and giving the spring leg (5) a T-shape.

7. A disc brake as claimed in any one of claims 1 through 6,
**characterized** in that the brake shoe (1) includes an engaging cam as a mechanical stop which, in the assembled position of the brake shoe (1), reaches behind the inside periphery of the piston (17), and in that, in the assembled position, the spring leg (5), beside the axial force, exerts only a low friction force on the brake shoe (1) which keeps the engaging cam in engagement with the piston (17).

8. A disc brake as claimed in any one of claims 3 through 7,
**characterized** in that the cup-shaped insert (7) is inserted into the cylinder opening of the piston (17), with the insert (7), by way of its external periphery, being held in the piston (17) and with the bottom of the insert (7) facing the brake shoe (1).

9. A disc brake as claimed in any one of claims 3 through 8,
**characterized** in that the insert (7) is shaped out of sheet metal and preferably has an inclined guide wall (15) which, in the direction of dismantling of the brake shoe (1), guides the projection out of the slot (8).

10. A disc brake as claimed in any one of claims 3 through 9,
**characterized** in that the projections (9, 10), projecting in the axial direction, are shaped from the insert (7).

11. A disc brake as claimed in any one of claims 3 through 10,
**characterized** in that the insert (7) includes a recess (14) associated with a projection (23) which preferably serves to fasten the spring on the brake shoe (1), the projection (23) plunging into the recess in the assembled position of the brake shoe (1) so as to provide an anti-twisting mechanism.

12. A brake shoe for a disc brake as claimed in any one of claims 1 through 11, wherein on the brake-shoe back wall averted from the friction pad, a spring leg (5) is provided which is slightly inclined at an oblique angle with respect to the backing plate (2), which essentially points in the radial direction and projects in the form of a leaf spring from the damping plate (3) on the backing plate (2) of the brake shoe (1),
**characterized** in that, at its free end, the spring leg (5) includes a projection (6) pointing substantially in a circumferential direction and providing the spring leg (5) with a T-shape by which the spring leg (5) can grip behind a counterpart on the piston (17) so as to retain it.

## Revendications

1. Frein à disque comprenant un ressort de maintien dont une branche ou ressort à lame (5), qui est orienté pratiquement suivant une direction radiale et qui est incliné suivant la direction axiale, s'accroche sur des moyens de guidage (8 à 13) lors d'un mouvement radial de montage de la plaquette de frein (1). le ressort à lame (5) étant soumis à une précontrainte au moins suivant la direction axiale dans la position de montage de la plaquette de frein (1), caractérisé en ce que le ressort de maintien est fixé sur la plaquette de frein (1) et en ce que les moyens de guidage (8 à 13), solidaires du boîtier de frein, sont constitués d'une fente (8) qui est disposée sur le piston (17) et est orientée pratiquement suivant une direction radiale et qui comporte au moins un rebord de guidage ou surface de guidage (11, 12) qui s'étend suivant une direction radiale et est incliné suivant la direction axiale. derrière lequel le ressort à lame (5) s'accroche lors du montage radial et qui met le ressort à lame (5) sous contrainte au moins suivant la direction axiale lors d'un déplacement radial de ce ressort à lame.

2. Frein à disque suivant la revendication 1, caractérisé en ce qu'à son extrémité libre, le ressort à lame (5) comporte un talon (6) qui est orienté pratiquement suivant la direction circonférentielle et qui s'accroche derrière la fente (8).

3. Frein à disque suivant la revendication 2, caractérisé en ce qu'une pièce rapportée (7), qui est disposée d'une manière pratiquement parallèle à la plaquette de support (2) et qui porte la fente (10), est fixée dans le piston (17) et en ce que deux parties en saillie (9. 10) qui sont orientées radialement sont fixées sur les bords de la fente et présentent une hauteur axiale croissant suivant la direction radiale et dont des bords qui font face suivant la direction axiale constituent les surfaces de guidage (11, 12).

4. Frein à disque suivant la revendication 2 ou 3. caractérisé en ce que la partie de la fente (8) qui est située au début dans le sens de montage comporte une ouverture transversale (13) qui est orientée pratiquement suivant la direction circonférentielle et par laquelle le talon (6) traverse la fente (8) pour s'accrocher derrière cette dernière lors d'un déplacement radial.

5. Frein à disque suivant l'une des revendications 1 à 4. caractérisé en ce que le ressort à lame (5) est fixé sur la plaquette de support (2), de préférence d'une manière inséparable, à l'endroit de la partie de cette plaquette de support (2) qui constitue la partie inférieure suivant la direction radiale dans la position de montage.

6. Frein à disque suivant l'une des revendications 2 à 5, caractérisé en ce que le talon (6) est constitué d'un élément transversal pratiquement rectangulaire qui prolonge le ressort à lame (5) et qui confère une forme en T à ce ressort à lame (5).

7. Frein à disque suivant l'une des revendications 1 à 6. caractérisé en ce que la plaquette de frein (1) comporte un bec de verrouillage qui sert de butée mécanique et qui s'accroche derrière la surface périphérique intérieure du piston (17) dans la position de montage de la plaquette de frein (1) et en ce que. dans la position de montage, le ressort à lame (5) n'exerce sur la plaquette de frein (1). en sus de la force axiale, qu'une faible force de frottement qui maintient le bec de verrouillage en prise sur le piston (17).

8. Frein à disque suivant l'une des revendications 3 à 7. caractérisé en ce que la pièce rapportée (7) en forme de cuvette est placée dans l'ouverture cylindrique du piston (17), tandis que cette pièce rapportée (7) est maintenue par sa surface périphérique extérieure dans le piston (17) et que le fond de la pièce rapportée (7) fait face à la plaquette de frein (1).

9. Frein à disque suivant l'une des revendications 3 à 8. caractérisé en ce que la pièce rapportée (7) est formée dans une tôle et comporte de préférence une paroi déflectrice (15) inclinée qui guide le talon hors de la fente (8) suivant la direction de démontage de la plaquette de frein (1).

10. Frein à disque suivant l'une des revendications 3 à 9. caractérisé en ce que les parties en saillie (9. 10) sont réalisées au formage à partir de la pièce rapportée (7) en se dressant suivant la direction axiale.

11. Frein à disque suivant l'une des revendications 3 à 10, caractérisé en ce que la pièce rapportée (7) est pourvue d'une partie évidée (14) qui est associée à une partie en saillie (23) servant de préférence à la fixation du ressort sur la plaquette de frein (1) et dans laquelle la partie en saillie (23) s'enfonce dans la position de montage de la plaquette de frein (1) en servant de moyens d'immobilisation en rotation.

12. Plaquette de frein, pour frein à disque suivant l'une des revendications 1 à 11. dans laquelle il est prévu. sur sa paroi arrière située à l'opposé de la garniture de friction, un ressort à lame (5) qui est légèrement incliné vis-à-vis de la plaquette de support (2) et est orienté pratiquement suivant une direction radiale et qui fait saillie hors de la tôle d'amortissement (3). sous forme d'une lame de ressort. en se dressant sur la plaquette de support (2) de la plaquette de frein (1), caractérisée en ce qu'à son extrémité libre, le ressort à lame (5) comporte un talon (6) qui est orienté pratiquement suivant la direction circonférentielle et confère une forme en T au ressort à lame (5) et à l'aide duquel le ressort à lame (5) peut s'accrocher, de façon à être maintenu, sur une pièce complémentaire située sur le piston (17).
